# EUROPÄISCHE PATENTSCHRIFT

(11) **EP 3 789 239 B1**
(45) Veröffentlichungstag und Bekanntmachung des Hinweises auf die Patenterteilung: **09.08.2023**
(21) Anmeldenummer: 20192278.8
(22) Anmeldetag: 21.08.2020
(51) Int. Cl.: B60N 2/14, B60N 2/02

(54) **FAHRZEUGSITZ MIT DREHVERSTELLEINRICHTUNG**
VEHICLE SEAT WITH ROTATION ADJUSTMENT DEVICE
SIÈGE DE VÉHICULE POURVU DE DISPOSITIF DE RÉGLAGE ROTATIF

(30) Priorität: 06.09.2019 DE 102019123964
(43) Veröffentlichungstag der Anmeldung: 10.03.2021
(73) Patentinhaber: GRAMMER AG, 92289 Ursensollen (DE)
(72) Erfinder: HALLER, Erwin, 92262 Birgland (DE)
(74) Vertreter: Hannke, Christian

(56) Entgegenhaltungen:
- CA-A1- 2 870 416
- DE-A1-102017 112 081
- JP-A- 2002 234 368
- US-A- 4 351 562
- US-B1- 6 572 172

## Beschreibung

Die Erfindung betrifft einen Fahrzeugsitz mit einem Unterteil zum Anordnen an einem Karosserieteil eines Nutzfahrzeugs und einem Oberteil zum Lagern eines Sitzteils, wobei der Fahrzeugsitz eine Drehverstelleinrichtung, mittels welcher zumindest Teile des Oberteils gegenüber dem Unterteil um eine Achse in Höhenrichtung des Fahrzeugsitzes rotierbar ist, aufweist, gemäß dem Oberbegriff des Anspruchs 1.

Gattungsgemäße Fahrzeugsitze mit Drehverstelleinrichtungen sind aus dem Stand der Technik bereits bekannt.

Beispielsweise werden hier zunächst Arretierungsvorrichtungen der Drehverstelleinrichtungen manuell gelöst, woraufhin eine Rotation des Oberteils durch eine vom Insassen des Fahrzeugsitzes initiierte Bewegung stattfinden kann. Allerdings sind derartige Einrichtungen in Höhenrichtung des Fahrzeugsitzes häufig mit einem verhältnismäßig großen Platzbedarf angeordnet. Außerdem wird es seitens des Fahrers manchmal als mühsam empfunden, mit eigener Kraft den Sitz zu verstellen. Zudem ist eine genaue manuelle Verstellung nur schwer möglich.

Ebenfalls bekannt sind elektrische Antriebe als Teil von Drehverstelleinrichtungen. Diese weisen jedoch oft ebenfalls einen großen Platzbedarf auf.

Das Dokument CA 2 870 416 A1 zeigt einen Fahrzeugsitz der gegenüber dem Fahrzeugboden mittels einer Dreheinrichtung drehbar gelagert und verbunden ist, wobei die

Dreheinrichtung einen Elektromotor umfasst, welcher zwischen dem Fahrzeugsitz und dem Fahrzeugboden angeordnet ist.

US 4 351 562 A zeigt einen Sitz mit einer Sitzbodenplatte, die an der Getriebeeinrichtung angebracht ist, und eine Einrichtung zum Drehen der Getriebeeinrichtung der verbundenen Sitzfläche.

Es ist daher Aufgabe der vorliegenden Erfindung, einen Fahrzeugsitz mit einer Drehverstelleinrichtung zu entwickeln, welcher eine kompakte Bauweise und eine hohe Genauigkeit hinsichtlich der erforderlichen Verstellung aufweist.

Die Aufgabe der Erfindung wird gelöst von einem Fahrzeugsitz mit den Merkmalen des Patenanspruchs 1, mit einem Unterteil zum Anordnen an einem Karosserieteil eines Nutzfahrzeugs und einem Oberteil zum Lagern eines Sitzteils, wobei der Fahrzeugsitz eine Drehverstelleinrichtung, mittels welcher zumindest Teile des Oberteils gegenüber dem Unterteil um eine Achse in Höhenrichtung des Fahrzeugsitzes rotierbar sind, aufweist, wobei die Drehverstelleinrichtung einen Elektromotor zur Rotation einer mit dem Oberteil starr verbundenen und gegenüber dem Unterteil um die Achse drehbar gelagerten Drehtellereinheit umfasst, wobei eine mit der Drehtellereinheit mechanisch wechselwirkende Antriebsachse des Elektromotors parallel zur Breitenrichtung des Fahrzeugsitzes angeordnet ist, wobei, jeweils in Höhenrichtung des Fahrzeugsitzes betrachtet, eine Ausdehnung des Elektromotors und eine Ausdehnung der Drehtellereinheit zumindest teilweise überlappend angeordnet sind. Vorteilhafte Ausgestaltungen der Erfindung finden sich in den abhängigen Patentansprüchen.

Die Drehtellereinheit und der Elektromotor der Drehverstelleinrichtung sind also in Höhenrichtung des Fahrzeugsitzes zumindest teilweise überlappend angeordnet. Dies reduziert den erforderlichen Bauraum enorm. Außerdem ist die Drehverstelleinrichtung elektrisch angetrieben, was den Kraftaufwand für den Sitzinsassen eliminiert und die Genauigkeit der gewünschten Verstellung erhöht.

Bevorzugt ist die Drehverstelleinrichtung selbsthemmend ausgestaltet. Dies lässt sich über den elektrischen Antrieb einfach realisieren. Bevorzugt ist somit die Drehverstelleinrichtung frei von einer zusätzlichen Verriegelungseinrichtung zum Verriegeln der Drehverstelleinrichtung in Bezug auf die Rotation des Oberteils gegenüber dem Unterteil um die Achse in Höhenrichtung ausgestaltet.

Bevorzugt umfasst der Fahrzeugsitz eine Vertikalfederungseinrichtung, mittels welcher das Sitzteil federnd gelagert ist. Bevorzugt sind die Längsverstelleinrichtung und die Drehverstelleinrichtung unterhalb der Vertikalfederungseinrichtung oder oberhalb der Vertikalfederungseinrichtung angeordnet. Beispielsweise sind die Längsverstelleinrichtung und die Drehverstelleinrichtung zwischen der Vertikalfederungseinrichtung und dem Sitzteil angeordnet.

Die Aktivierung der Drehverstelleinrichtung kann manuell erfolgen, beispielsweise über das Betätigen eines Auslöseelements (Bedienknopf) an einer Bedieneinrichtung durch den Fahrer. Daneben ist es möglich, dass die Aktivierung der Drehverstelleinrichtung automatisch erfolgt. Hierzu ist es denkbar, dass ein Steuerungssystem des Fahrzeugs in der Lage ist, eine Fahrererkennung durchzuführen und anschließend die bevorzugten Einstellungen hinsichtlich der Drehverstellung des erkannten Fahrers vornimmt ("Memoryfunktion"). Beispielsweise erfolgt die Erkennung bei der Aktivierung des Fahrzeugs über die Erkennung des einem bestimmten Fahrer zuordenbaren Schlüssels. Alternativ ist es möglich, dass der Fahrer sich selbst gegenüber dem Fahrzeug zu erkennen gibt; so kann er als "Fahrer 1" beispielsweise eine entsprechende Taste drücken oder innerhalb eines Menüs seinen Namen ("Fahrer 1") auswählen.

Um den Platzbedarf weiter zu reduzieren, ist es bevorzugt, dass der Elektromotor mit einem vorderen Ende des Oberteils verbunden ist. Der Elektromotor ist bevorzugt das Teil der Drehverstelleinrichtung, bei dem eine Relation der Ausdehnung in Höhenrichtung zu einer Ausdehnung in Breitenrichtung und/oder einer Ausdehnung in Längsrichtung den geringsten Wert aufweist. Mit anderen Worten ist bevorzugt ein Verhältnis einer den Elektromotor umhüllenden Oberfläche zu einem Volumen des Elektromotors innerhalb der umhüllenden Oberfläche im Vergleich zu den entsprechenden Verhältnissen aller anderen Teile der Drehverstelleinrichtung relativ klein. Der Elektromotor ist daher bevorzugt in Längsrichtung des Fahrzeugsitzes nicht mittig, sondern am vorderen Ende des Oberteils angeordnet. Damit kann auch gewährleistet werden, dass entstehende Wärme des Elektromotors schneller abgeführt werden kann.

Bevorzugt ist eine obere Grenze der Drehverstelleinrichtung und/oder eine untere Grenze der Drehverstelleinrichtung mittels des Elektromotors ausgestaltet. Bevorzugt ist eine vordere Grenze der Drehverstelleinrichtung mittels des Elektromotors ausgestaltet.

Erfindungsgemäß ist die Drehverstelleinrichtung frei von einer Verbindung zum Unterteil und/oder kontaktlos zum Unterteil ausgestaltet, um die gewünschte Relativrotation nicht zu behindern.

Eine vorteilhafte Ausgestaltung der Drehverstelleinrichtung sieht vor, dass diese eine Primärgetriebeeinheit aufweist, welche antriebsseitig mit dem zweiten Elektromotor und abtriebsseitig mit einer Sekundärgetriebeeinheit der Drehverstelleinrichtung mechanisch wirkverbunden ist, wobei die Sekundärgetriebeeinheit mit einer mit dem Oberteil starr verbundenen und gegenüber dem Unterteil drehbar gelagerten Drehtellereinheit der Drehverstelleinrichtung mechanisch wirkverbunden angeordnet ist.

Dabei umfasst die Primärgetriebeeinheit beispielsweise eine Schneckengetriebeeinheit, welche bevorzugt ein erstes und ein zweites Schneckenrad umfasst. Das erste Schneckenrad ist dabei bevorzugt starr mit der zweiten Antriebsachse des zweiten Elektromotors verbunden. Das zweite Schneckenrad steht mit dem ersten Schneckenrad im Eingriff. Bevorzugt ist die Mittelachse des zweiten Schneckenrads senkrecht zur Mittelachse des ersten Schneckenrads und/oder parallel zur Höhenrichtung des Fahrzeugsitzes angeordnet.

Dabei umfasst die Sekundärgetriebeeinheit vorteilhaft ein mit einem Umfang der Drehtellereinheit wechselwirkendes und in sich geschlossenes bandförmiges Kraftübertragungsmittel, welches mittels des zweiten Elektromotors in Richtung seines Umfangs förderbar ist.

Bevorzugt steht das bandförmige Kraftübertragungsmittel mit dem zweiten Schneckenrad in Eingriff, so dass eine Drehung der Antriebsachse des zweiten Elektromotors über das erste Schneckenrad und das zweite Schneckenrad in eine Drehung des bandförmigen Kraftübertragungsmittels übertragen wird. Beispielsweise ist das zweite Schneckenrad hierfür entlang seiner Mittelachse mit zwei benachbarten Funktionsbereichen versehen, wobei der erste Funktionsbereich eine Schrägverzahnung aufweist und mit dem ersten Schneckenrad im Eingriff steht, und wobei der zweite Funktionsbereich zur Wechselwirkung mit dem bandförmigen Kraftübertragungsmittel ausgebildet ist. Beispiele für den zweiten Funktionsbereich werden unten genauer beschrieben.

Der Ausdruck "bandförmig" wird im Sinne der vorliegenden Erfindung verstanden als ein Element, dessen Querschnittsabmessungen im Vergleich zu seiner Länge klein sind. Das bandförmige Element ist bevorzugt bezogen auf seine Länge geschlossen ausgebildet.

Beispielsweise ist die Drehtellereinheit als ein Kettenrad und das bandförmige Kraftübertragungsmittel als ein Kettenelement ausgestaltet. Gemäß dieser Variante ist also eine formschlüssige Wechselwirkung zwischen der Drehtellereinheit und dem bandförmige Kraftübertragungsmittel ausgestaltet. Somit ist hier bevorzugt auch der zweite Funktionsbereich des zweiten Schneckenrads als ein Kettenrad ausgestaltet.

Eine weitere Variante, gemäß welcher eine kraftschlüssige Wechselwirkung zwischen der Drehtellereinheit und dem bandförmige Kraftübertragungsmittel ausgestaltet ist, sieht vor, dass die Drehtellereinheit als ein Riemenscheibenelement und das bandförmige Kraftübertragungsmittel als ein Riemenelement ausgestaltet ist. Beispielsweise ist das bandförmige Kraftübertragungsmittel als ein Keilriemen oder als ein Poly-V-Riemen und die Drehtellereinheit als eine entsprechend komplementär dazu ausgestaltete Riemenscheibe ausgestaltet. Somit ist hier bevorzugt auch der zweite Funktionsbereich des zweiten Schneckenrads als eine entsprechend komplementär zum bandförmigen Kraftübertragungsmittel ausgestaltete Riemenscheibe ausgestaltet.

Ebenfalls denkbar ist es, dass ein formschlüssiger Riementrieb vorgesehen ist. Somit ist es beispielsweise möglich, dass die Drehtellereinheit als ein gezahntes Riemenscheibenelement und das bandförmige Kraftübertragungsmittel als ein Zahnriemenelement ausgestaltet ist.

Neben dem Einsatz eines bandförmigen Kraftübertragungsmittels wäre es auch denkbar, ein Zahnradgetriebe zwischen der Antriebsachse des Elektromotors und der Drehtellereinheit anzuordnen. Hierfür könnte die Drehtellereinheit ein Drehtellerelement in Form eines Zahnrads umfassen, welches durch den Elektromotor über das Zahnradgetriebe angetrieben wird.

Bevorzugt umfasst die Drehverstelleinrichtung weiterhin eine Wälzlagerkranzeinheit, welche in Höhenrichtung des Fahrzeugsitzes oberhalb der Drehtellereinheit angeordnet ist. Diese umfasst bevorzugt einen oberen Käfigteller und einen unteren Käfigteller, zwischen welchen Wälzlagerkörper, beispielsweise Kugeln, angeordnet sind.

Der obere Käfigteller ist beispielsweise Teil einer ersten Abdeckplatte, welche die Drehverstelleinrichtung in Höhenrichtung nach oben hin abschließt. Die erste Abdeckplatte ist bevorzugt starr mit der Drehtellereinheit verbunden, so dass eine Rotation der Drehtellereinheit in eine Rotation der ersten Abdeckplatte übertragen wird; bevorzugt erfolgt dies im Übersetzungsverhältnis 1:1.

Der untere Käfigteller ist beispielsweise Teil einer zweiten Abdeckplatte, welche in Höhenrichtung unterhalb der ersten Abdeckplatte angeordnet ist. Bevorzugt ist die zweite Abdeckplatte frei von einer mechanischen Verbindung zur Drehtellereinheit ausgestaltet, so dass eine Rotation der Drehtellereinheit nicht in eine Rotation der zweiten Abdeckplatte übertragen wird.

Insofern sind bevorzugt nur Teile des Oberteils gegenüber dem Unterteil mittels der Drehverstelleinrichtung drehbar gelagert. Bevorzugt sind mittels der Drehverstelleinrichtung drehbar gelagert: die obere Abdeckplatte, die Drehtellereinheit sowie Teile, welche beispielsweise in Höhenrichtung oberhalb der oberen Abdeckplatte angeordnet sind und welche beispielsweise das eigentliche Sitzteil mit Sitzfläche und/oder Rückenlehne ausgestalten. Bevorzugt sind nicht mittels der Drehverstelleinrichtung drehbar gelagert: die Längsverstelleinrichtung, die untere Abdeckplatte, die Primärgetriebeeinheit, der zweite Elektromotor und/oder die Sekundärgetriebeeinheit.

Außerdem ist es bevorzugt, wenn die Drehverstelleinrichtung ausgehend von einer Grundstellung um mehr als 180° in beide Drehrichtungen drehbar ist. Es ist außerdem bevorzugt, wenn ein maximaler Drehwinkel je nach Wunsch des Fahrers über die Motorsteuerung frei programmierbar ist.

Bevorzugt umfasst die Drehverstelleinrichtung eine Spanneinheit, mittels welcher eine Vorspannung des bandförmigen Kraftübertragungsmittels einstellbar ist. Beispielsweise umfasst die Spanneinheit ein mit dem bandförmigen Kraftübertragungsmittel in Eingriff stehendes Element, dessen Position entlang einer Führungsbahn verstellbar ist. Bevorzugt ist das Element als Scheibe oder als Kettenrad ausgestaltet. Bevorzugt ist die Führungsbahn in einer Ebene ausgebildet, welche senkrecht zur Höhenrichtung des Fahrzeugsitzes und/oder zur Mittelachse des zweiten Schneckenrads angeordnet ist. Beispielsweise ist die Führungsbahn in Form einer Aussparung eines Gehäuseblechs vorgesehen. Bevorzugt ist mittels dieses Gehäuseblechs ebenfalls ein Lagersitz für den zweiten Antriebsmotor ausgebildet.

Es sei darauf hingewiesen, dass im Sinne der vorliegenden Erfindung die Positionsangaben (beispielsweise vorne, hinten, oben, unten, links, rechts etc.) und Richtungsangaben (Höhenrichtung, Längsrichtung, Breitenrichtung) immer in Bezug auf den Fahrzeugsitz definiert sind. Globale Einflüsse, wie zum Beispiel eine Hangabwärtsfahrt eines den Fahrzeugsitz umfassenden Fahrzeugs und eine dadurch resultierenden Auslenkung des Fahrzeugsitzes sind hingegen nicht relevant.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungseinrichtungen dargestellt und beschrieben ist.

In der Zeichnung zeigen:
- Figur 1a: eine perspektivische Ansicht von Teilen eines erfindungsgemäßen Fahrzeugsitzes mit einer Längsverstelleinrichtung und einer Drehverstelleinrichtung;
- Figur 1b: die Ansicht gemäß der Fig. 1a ohne obere Abdeckelemente;
- Figur 1c: die Ansicht gemäß der Fig. 1a mit zusätzlich ausgeblendeten Elementen;
- Figur 1d: die Ansicht gemäß der Fig. 1a mit zusätzlich ausgeblendeten Elementen;
- Figur 1e: eine Draufsicht von Teilen des erfindungsgemäßen Fahrzeugsitzes gemäß der Fig. 1;
- Figur 1f, 1g: Querschnittsansichten der Fig. 1e
- Fig. 2a, 2b, 2c: die Ansicht gemäß der Fig. 1e in verschiedenen Rotationszuständen der Drehverstelleinrichtung;
- Fig. 2d: eine weitere perspektivische Ansicht von Teilen des erfindungsgemäßen Fahrzeugsitzes gemäß Fig. 1a;
- Fig. 2e: eine Detailansicht der Ansicht gemäß dem Ausschnitt A' aus Fig. 2d;
- Fig. 3a: eine perspektivische Ansicht der Längsverstelleinrichtung in einem Explosionszustand;
- Fig. 3b: eine Seitenansicht von Teilen des erfindungsgemäßen Fahrzeugsitzes gemäß der Fig. 1a in verschiedenen Translationszuständen der Längsverstelleinrichtung;
- Fig. 3c: eine Draufsicht der Längsverstelleinrichtung;
- Fig. 3d, 3e: Querschnittsansichten der Fig. 3c;
- Fig. 4: eine stark vereinfachte Darstellung eines erfindungsgemäßen Fahrzeugsitzes.

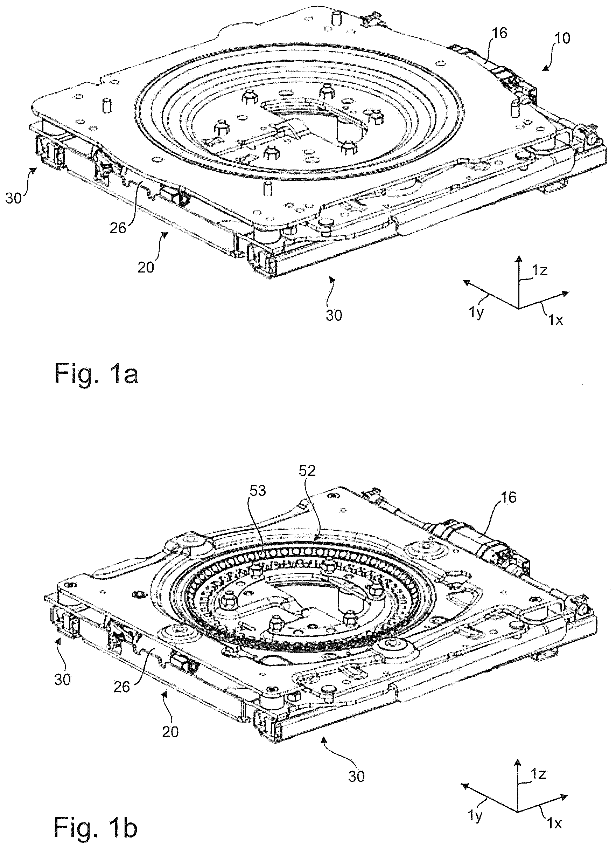

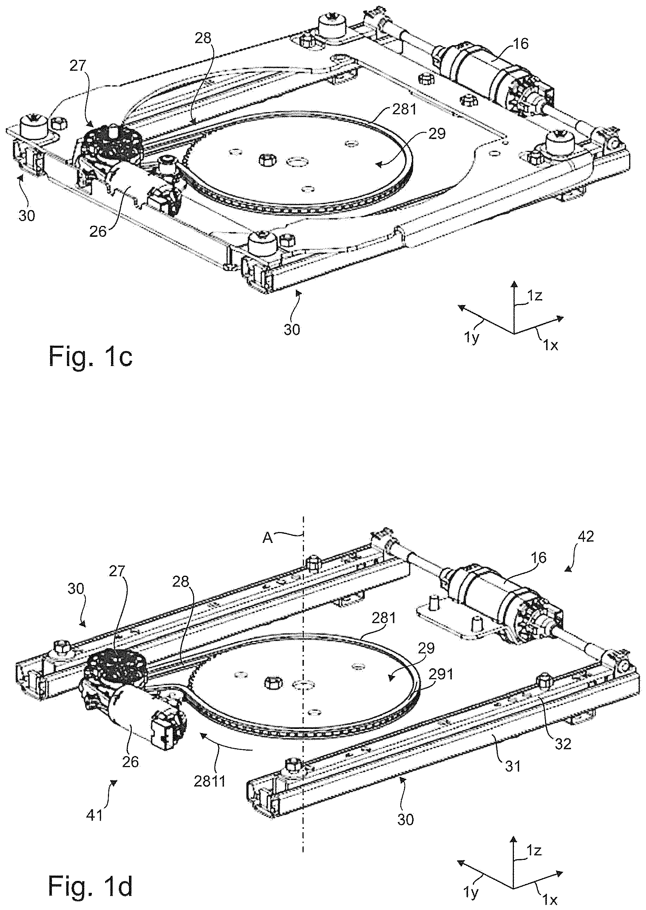

Es sei erwähnt, dass zur besseren Übersichtlichkeit in manchen Figuren einige Komponenten nicht dargestellt sind. So zeigen die Figuren 1a, 1b, 1c, 1d, 1e, 1f, 1g, 2a, 2b, 2c, 2d, 2e, 3a, 3b, 3c, 3d und 3e nur Teile eines erfindungsgemäßen Fahrzeugsitzes 1.

Ebenfalls sei erwähnt, dass in den Figuren eine Längsverstelleinrichtung 10 gezeigt und nachfolgend beschrieben ist. Diese arbeitet jedoch mechanisch und elektrisch unabhängig von der Drehverstelleinrichtung 20 und ist daher nicht zwingend notwendig Teil des Fahrzeugsitzes 1. Ihre Beschreibung dient daher lediglich der Veranschaulichung, wie die Anordnung der Drehverstelleinrichtung innerhalb des Fahrzeugsitzes 1 ausgestaltet sein könnten.

Außerdem sind die Abbildungen jeweils mit einem kartesischen Koordinatensystem versehen, welches die drei Achsen 1x (Längsrichtung des Fahrzeugsitzes 1 von vorne nach hinten entsprechend der Pfeilrichtung), 1y (Breitenrichtung des Fahrzeugsitzes 1 von links nach rechts entsprechend der Pfeilrichtung) sowie 1z (Höhenrichtung des Fahrzeugsitzes 1 von unten nach oben entsprechend der Pfeilrichtung) aufweist.

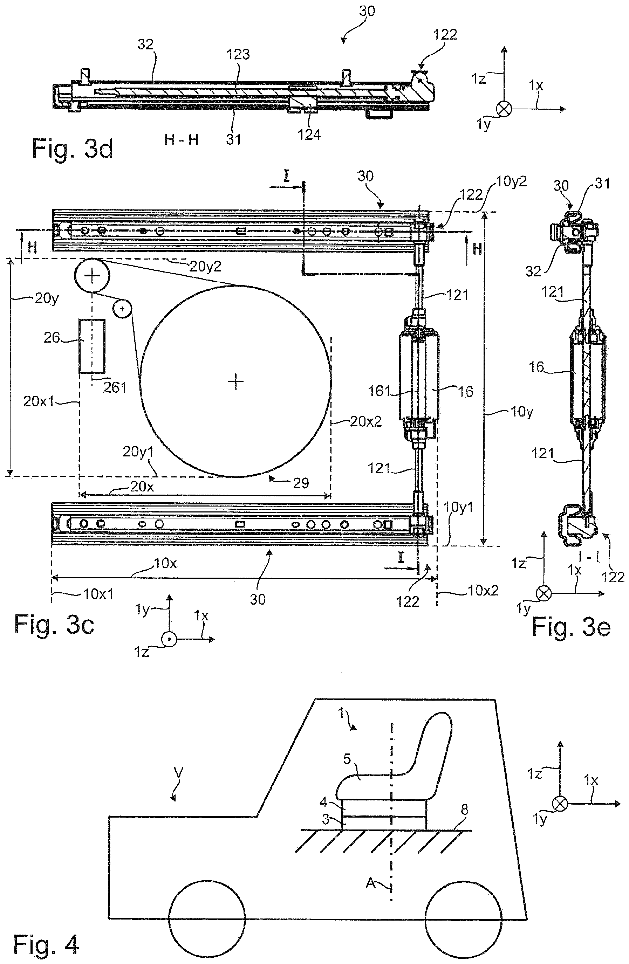

Fig. 4 zeigt schematisch einen Fahrzeugsitz 1 mit einem Unterteil 3 zum Anordnen an einem Karosserieteil 8 eines Nutzfahrzeugs V und einem Oberteil 4 zum Lagern eines Sitzteils 5. Der Fahrzeugsitz 1 umfasst dabei eine gemäß der Fig. 4 nicht gezeigte Längsverstelleinrichtung (siehe Längsverstelleinrichtung 10 gemäß den restlichen Figuren), mittels welcher das Oberteil 4 gegenüber dem Unterteil 3 in Längsrichtung 1x und/oder Breitenrichtung 1y des Fahrzeugsitzes 1 verschiebbar ist, sowie eine von der Längsverstelleinrichtung unabhängig arbeitende und gemäß der Fig. 4 nicht gezeigte Drehverstelleinrichtung (siehe Drehverstelleinrichtung 20 gemäß den restlichen Figuren), mittels welcher zumindest Teile des Oberteils 4 gegenüber dem Unterteil 3 um eine Achse A in Höhenrichtung 1z des Fahrzeugsitzes 1 rotierbar sind.

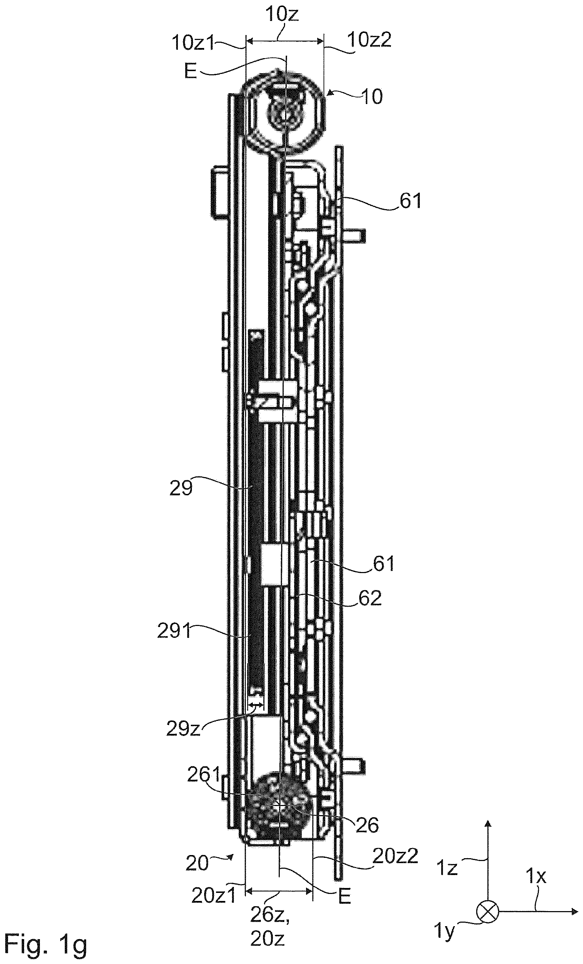

Weiterhin ist eine virtuelle Ebene E bereitgestellt (siehe hier Fig. 1g), welche parallel zu einer Längsrichtung 1x und einer Breitenrichtung 1y des Fahrzeugsitzes 1 sowie die Längsverstelleinrichtung 10 und die Drehverstelleinrichtung 20 schneidend angeordnet ist, wobei die Längsverstelleinrichtung 10 und die Drehverstelleinrichtung 20 elektrisch angetrieben ausgestaltet sind.

Die Längsverstelleinrichtung 10 und die Drehverstelleinrichtung 20 sind also in Höhenrichtung 1x des Fahrzeugsitzes 1 zumindest teilweise überlappend angeordnet.

Ebenfalls gezeigt ist (siehe Fig. 1g), dass die Drehverstelleinrichtung 20 einen Elektromotor 26 zur Rotation einer mit dem Oberteil 4 starr verbundenen und gegenüber dem Unterteil 3 um die Achse A drehbar gelagerten Drehtellereinheit 29 umfasst, wobei eine mit der Drehtellereinheit 29 mechanisch wechselwirkende Antriebsachse 261 des Elektromotors 26 parallel zur Breitenrichtung 1y des Fahrzeugsitzes 1 angeordnet ist, wobei, jeweils in Höhenrichtung 1z des Fahrzeugsitzes 1 betrachtet, eine Ausdehnung 26z des Elektromotors 26 und eine Ausdehnung 29z der Drehtellereinheit 29 zumindest teilweise überlappend angeordnet sind.

Vorliegend ist die Drehverstelleinrichtung 20 selbsthemmend ausgestaltet, was über den elektrischen Antrieb realisiert ist. Ansonsten ist die Drehverstelleinrichtung 20 frei von einer zusätzlichen Verriegelungseinrichtung zum Verriegeln der Drehverstelleinrichtung 20 in Bezug auf die Rotation des Oberteils 4 gegenüber dem Unterteil 3 um die Achse A in Höhenrichtung 1z ausgestaltet.

Die Fig. 1g zeigt außerdem, dass eine erste Höhenausdehnung 10z der Längsverstelleinrichtung 10 in Höhenrichtung 1z des Fahrzeugsitzes 1 eine erste obere Grenze 10z1 und eine erste untere Grenze 10z2 aufweist, und dass eine zweite Höhenausdehnung 20z von Teilen der Drehverstelleinrichtung 20 in Höhenrichtung 1z des Fahrzeugsitzes 1 eine zweite obere Grenze 20z1 und eine zweite untere Grenze 20z2 aufweist, wobei, jeweils in Höhenrichtung 1z des Fahrzeugsitzes 1 betrachtet, die erste obere Grenze 10z1 oberhalb von der zweiten oberen Grenze 20z1 und die erste untere Grenze 10z2 unterhalb von der zweiten unteren Grenze 20z2 angeordnet ist.

Die Drehverstelleinrichtung 20 ist also vorliegend teilweise zwischen den beiden Grenzen 10z1, 10z2 der Längsverstelleinrichtung 10 in Höhenrichtung 1z angeordnet.

Vorliegend ist die erste obere Grenze 10z1 und die erste untere Grenze 10z2 mittels eines ersten Elektromotors 16 ausgestaltet. Vorliegend ist die zweite obere Grenze 20z1 und die zweite untere Grenze 20z2 mittels eines zweiten Elektromotors 26 ausgestaltet. Nicht gezeigt sind weitere Elemente der Drehverstelleinrichtung 20, welche gegebenenfalls oberhalb der ersten oberen Grenze 10z1 angeordnet sind.

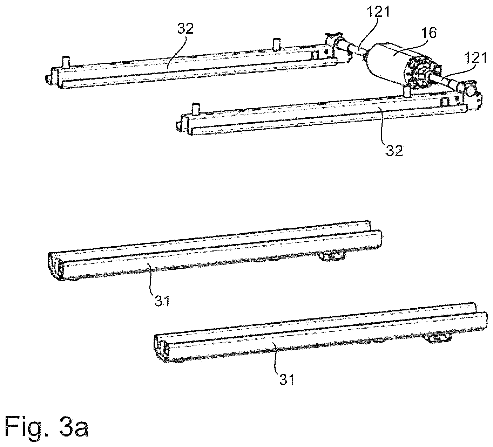

Ferner ist gemäß der Fig. 3c gezeigt, dass eine erste Längsausdehnung 10x der Längsverstelleinrichtung 10 in Längsrichtung 1x des Fahrzeugsitzes 1 eine erste vordere Grenze 10x1 und eine erste hintere Grenze 10x2 aufweist, wobei eine zweite Längsausdehnung 20x von Teilen der Drehverstelleinrichtung 20 in Längsrichtung 1x des Fahrzeugsitzes 1 eine zweite vordere Grenze 20x1 und eine zweite hintere Grenze 20x2 aufweist, wobei, jeweils in Längsrichtung 1x des Fahrzeugsitzes 1 betrachtet, die erste vordere Grenze 10x1 vor der zweiten vorderen Grenze 20x1 und die erste hintere Grenze 10x2 hinter der zweiten hinteren Grenze 20x2 angeordnet ist.

Die Drehverstelleinrichtung 20 ist also vorliegend teilweise zwischen den beiden Grenzen 10x1, 10x2 der Längsverstelleinrichtung 10 in Längsrichtung 1x angeordnet.

Vorliegend ist die erste vordere Grenze 10x1 mittels der beiden Schieneneinheiten 30 und die erste hintere Grenze 10x2 mittels des ersten Elektromotors 16 ausgestaltet. Vorliegend ist die zweite vordere Grenze 20x1 mittels des zweiten Elektromotors 26 und die zweite hintere Grenze 20x2 mittels eines bandförmigen Kraftübertragungsmittels 281 ausgestaltet. Nicht gezeigt sind weitere Elemente der Drehverstelleinrichtung 20, welche gegebenenfalls außerhalb eines Bereichs zwischen der ersten vorderen Grenze 10x1 und der ersten hinteren Grenze 10x2 angeordnet sind.

Weiterhin zeigt die Fig. 3c, dass eine erste Breitenausdehnung 10y der Längsverstelleinrichtung 10 in Breitenrichtung 1y des Fahrzeugsitzes 1 eine erste linke Grenze 10y1 und eine erste rechte Grenze 10y2 aufweist, wobei eine zweite Breitenausdehnung 20y der Drehverstelleinrichtung 20 in Breitenrichtung 1y des Fahrzeugsitzes 1 eine zweite linke Grenze 20y1 und eine zweite rechte Grenze 20y2 aufweist, wobei, jeweils in Breitenrichtung 1y des Fahrzeugsitzes 1 betrachtet, die erste linke Grenze 10y1 links von der zweiten linken Grenze 20y1 und die erste rechte Grenze 10y2 rechts von der zweiten rechten Grenze 20y2 angeordnet ist.

Die Drehverstelleinrichtung 20 ist also vorliegend vollständig zwischen den beiden Grenzen 10y1, 10y2 der Längsverstelleinrichtung 10 in Breitenrichtung 1y angeordnet.

Vorliegend ist die erste linke Grenze 10y1 mittels der linken Schienen 30 und die erste rechte Grenze 10y2 mittels der rechten Schienen 30 ausgestaltet. Vorliegend ist die zweite linke Grenze 20y1 mittels des bandförmigen Kraftübertragungsmittels 281 und die zweite rechte Grenze 20y2 mittels einer Primärgetriebeeinheit 27 ausgestaltet.

Vorliegend umfassen die Längsverstelleinrichtung 10 einen ersten Elektromotor 16 zur Verschiebung des Oberteils 4 gegenüber dem Unterteil 3 in Längsrichtung 1x des Fahrzeugsitzes 1 und die Drehverstelleinrichtung 20 einen zweiten Elektromotor 26 zur Rotation des Oberteils 4 gegenüber dem Unterteil 3 um die Achse A in Höhenrichtung 1z des Fahrzeugsitzes 1, wobei eine erste Antriebsachse 161 des ersten Elektromotors 16 und eine zweite Antriebsachse 261 des zweiten Elektromotors 26 parallel zueinander und parallel zur Breitenrichtung 1y des Fahrzeugsitzes 1 angeordnet sind (siehe Fig. 3c).

Der Bauraum für beide Elektromotoren 16, 26 und die beiden Elektromotoren 16, 26 selbst sind also vorliegend beabstandet zueinander angeordnet. Vorliegend ist die erste Antriebsachse 161 des ersten Elektromotors 16 senkrecht zur Längsausdehnung der Gleitschienen 32 und der Führungsschienen 31 angeordnet. So ist eine mechanische Anbindung des ersten Elektromotors 16 an die Gleitschienen 32 vereinfacht.

Die Fig. 1d zeigt auch, dass der erste Elektromotor 16 mit einem hinteren Ende 42 des Oberteils 4 und der zweite Elektromotor 26 mit einem vorderen Ende 41 des Oberteils 4 verbunden sind. Die relativ bauraumintensiven Elektromotoren 16, 26 sind also räumlich getrennt voneinander und darüber hinaus möglichst weit beabstandet voneinander angeordnet.

Insbesondere die Fig. 3d zeigt ferner, dass die Längsverstelleinrichtung 10 zwei in Längsrichtung 1x und/oder Breitenrichtung 1y angeordnete Schieneneinheiten 30 mit jeweils einer Führungsschiene 31 und einer Gleitschiene 32 umfasst, wobei die Führungsschienen 31 jeweils mit dem Unterteil 3 und die Gleitschienen 32 jeweils mit dem Oberteil 4 verbunden sind. Außerdem zeigt die Fig. 3c, dass vorliegend mittels des ersten Elektromotors 16, welcher zwischen den beiden Schieneneinheiten 30 angeordnet und mit jeder der Gleitschienen 32 über jeweils eine Getriebeeinheit wechselwirkend verbunden ist, die Gleitschiene 32 jeweils gegenüber der Führungsschiene 31 verlagerbar ist.

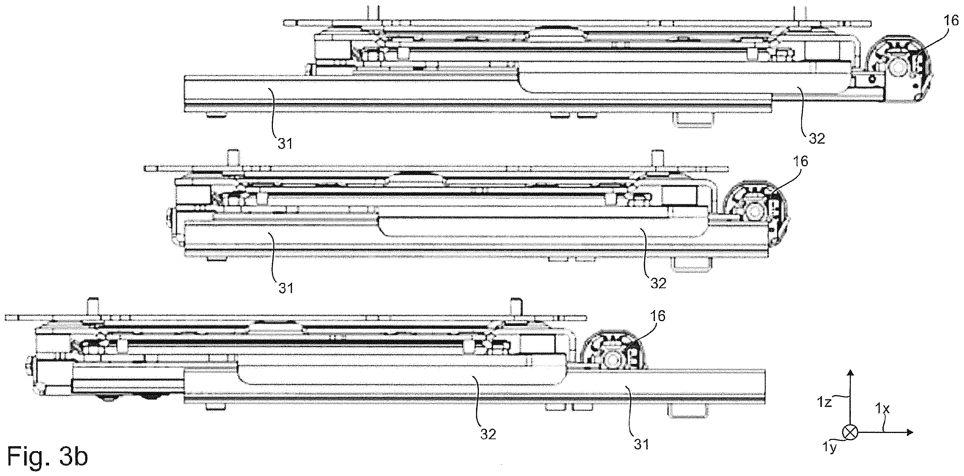

Die Fig. 3b zeigt jeweils bezüglich einer Längsverstellung in Längsrichtung 1x der Gleitschiene 32 gegenüber der Führungsschiene 31 verschiedene Zustände: von oben nach unten einen hinteren Maximalzustand, einen mittleren Zustand und einen vorderen Maximalzustand.

Dabei ist gemäß den Fig. 3c, 3d und 3e gezeigt, dass jede der Getriebeeinheiten vorliegend Folgendes umfasst: eine mit der ersten Antriebsachse 161 des ersten Elektromotors 16 fluchtende und damit wirkverbundene Welle 121 und eine Schneckengetriebeeinheit 122, welche auf einer ersten Seite mit der Welle 121 und auf einer zweiten Seite mit einem innerhalb einer der Gleitschienen 32 angeordneten Spindelelement 123 wirkverbunden ist, wobei das Spindelelement 123 mit einem starr mit einer der Führungsschienen 31 verbundenen Mitnehmerelement 124 wirkverbunden ist.

Generell ist es vorliegend vorgesehen, dass die Drehverstelleinrichtung 20 frei von einer Verbindung zum Unterteil 3 und kontaktlos zum Unterteil 3 ausgestaltet ist.

Vorliegend zeigt insbesondere die Fig. 1d, dass die Drehverstelleinrichtung 20 eine Primärgetriebeeinheit 27 aufweist, welche antriebsseitig mit dem zweiten Elektromotor 26 und abtriebsseitig mit einer Sekundärgetriebeeinheit 28 der Drehverstelleinrichtung 20 wirkverbunden ist, wobei die Sekundärgetriebeeinheit 28 mit einer mit dem Oberteil 4 starr verbundenen und gegenüber dem Unterteil 3 drehbar gelagerten Drehtellereinheit 29 der Drehverstelleinrichtung 20 wirkverbunden angeordnet ist.

Details der Primärgetriebeeinheit 27 sind nicht gezeigt. Es umfasst die Primärgetriebeeinheit 27 vorliegend eine Schneckengetriebeeinheit, welche ein erstes und ein zweites Schneckenrad umfasst. Das erste Schneckenrad ist dabei starr mit der zweiten Antriebsachse 261 des zweiten Elektromotors 26 verbunden. Das zweite Schneckenrad steht mit dem ersten Schneckenrad im Eingriff, wobei die Mittelachse des zweiten Schneckenrads senkrecht zur Mittelachse des ersten Schneckenrads und parallel zur Höhenrichtung 1z des Fahrzeugsitzes 1 angeordnet ist.

Es umfasst die Sekundärgetriebeeinheit 28 vorliegend ein mit einem Umfang 291 der Drehtellereinheit 29 wechselwirkendes und in sich geschlossenes bandförmiges Kraftübertragungsmittel 281, welches mittels des zweiten Elektromotors 26 in Richtung seines Umfangs 2811 förderbar ist.

Vorliegend steht das bandförmige Kraftübertragungsmittel 281 mit dem nicht gezeigten zweiten Schneckenrad in Eingriff, so dass eine Drehung der Antriebsachse 261 des zweiten Elektromotors 26 über das erste Schneckenrad und das zweite Schneckenrad in eine Drehung des bandförmigen Kraftübertragungsmittels 281 und in eine Drehung der Drehtellereinheit 29 übertragen wird. Vorliegend ist das zweite Schneckenrad hierfür entlang seiner Mittelachse mit zwei benachbarten Funktionsbereichen versehen, wobei der erste Funktionsbereich eine Schrägverzahnung aufweist und mit dem ersten Schneckenrad im Eingriff steht, und wobei der zweite Funktionsbereich zur Wechselwirkung mit dem bandförmigen Kraftübertragungsmittel 281 ausgebildet ist.

Das bandförmige Kraftübertragungsmittel 281 ist vorliegend ein Element, dessen Querschnittsabmessungen im Vergleich zur Länge klein sind. Es ist vorliegend bezogen auf seine Länge geschlossen ausgebildet.

Vorliegend ist die Drehtellereinheit 29 als ein Kettenrad und das bandförmige Kraftübertragungsmittel 281 als ein Kettenelement oder eine Kette ausgestaltet. Gemäß dieser Variante ist also eine formschlüssige Wechselwirkung zwischen der Drehtellereinheit 29 und dem bandförmige Kraftübertragungsmittel 281 ausgestaltet. Somit ist hier vorliegend auch der zweite Funktionsbereich des zweiten Schneckenrads als ein Kettenrad ausgestaltet.

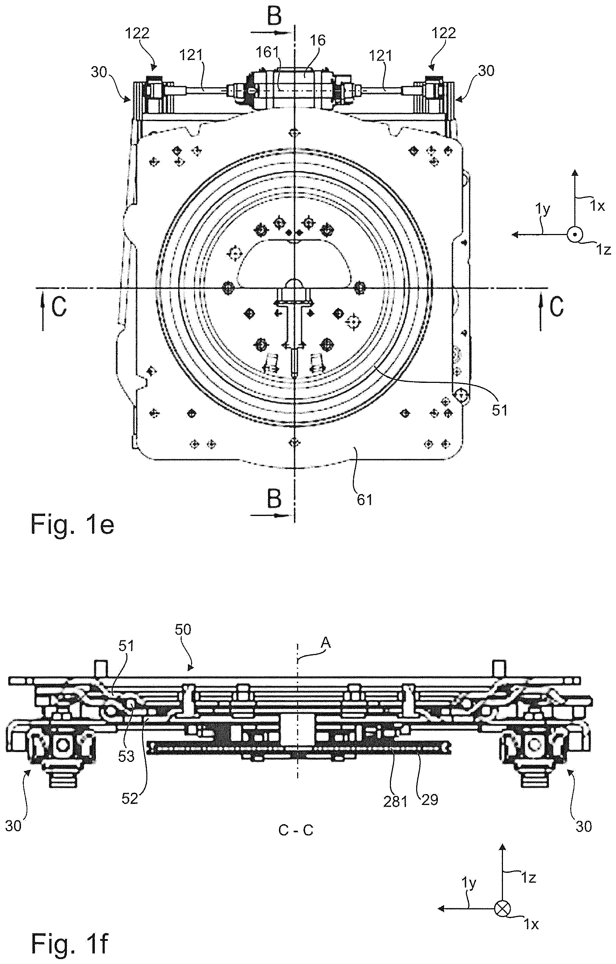

Vorliegend umfasst die Drehverstelleinrichtung 20 weiterhin eine Wälzlagerkranzeinheit 50 (siehe hier insbesondere Fig. 1f), welche in Höhenrichtung 1z des Fahrzeugsitzes 1 oberhalb der Drehtellereinheit 29 angeordnet ist. Diese umfasst bevorzugt einen oberen Käfigteller 51 und einen unteren Käfigteller 52, zwischen welchen Wälzlagerkörper 53, beispielsweise Kugeln, angeordnet sind.

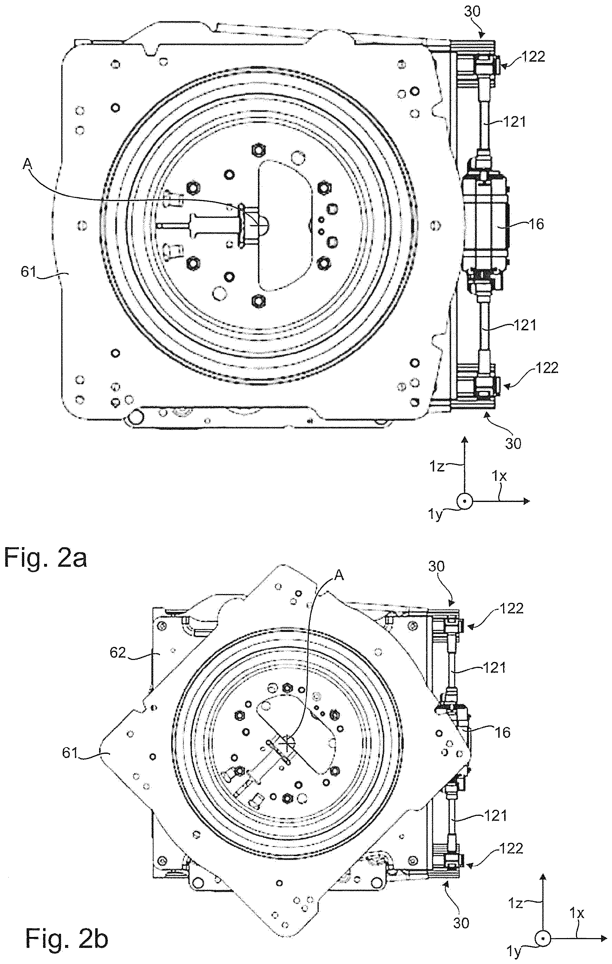

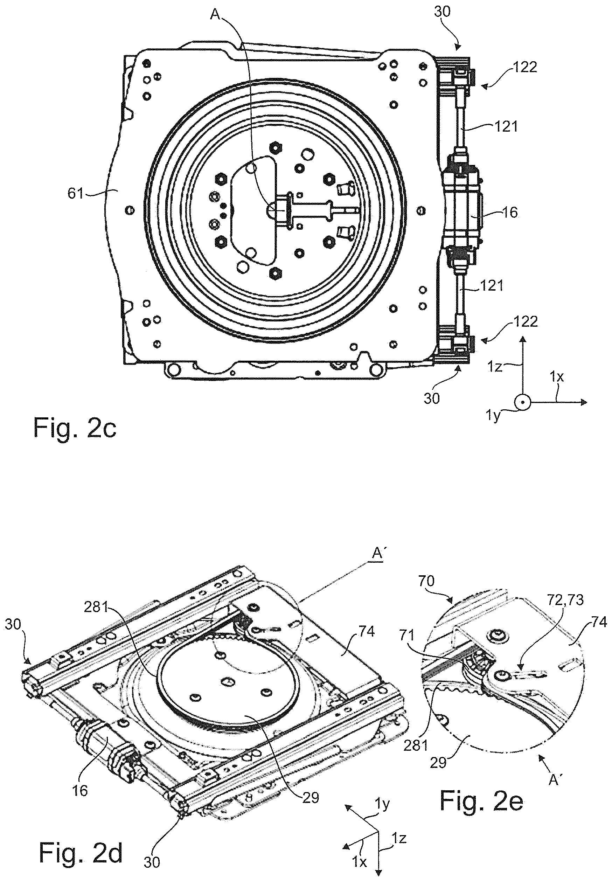

Der obere Käfigteller 51 ist vorliegend Teil einer ersten Abdeckplatte 61, welche die Drehverstelleinrichtung 20 in Höhenrichtung 1z nach oben hin abschließt (siehe hier Fig. 1e). Die erste Abdeckplatte 61 ist vorliegend starr mit der Drehtellereinheit 29 verbunden, so dass eine Rotation der Drehtellereinheit 29 im Übersetzungsverhältnis 1:1in eine Rotation der ersten Abdeckplatte 61 übertragen wird. Die Figuren 2a, 2b und 2c zeigen hier verschiedene Rotationszustände der ersten Abdeckplatte 61.

Der untere Käfigteller 52 ist vorliegend Teil einer zweiten Abdeckplatte 62, welche in Höhenrichtung 1z unterhalb der ersten Abdeckplatte 61 angeordnet ist. Vorliegend ist die zweite Abdeckplatte 62 bis auf die Wälzlagerung mittels der Kugeln 53 frei von einer mechanischen Verbindung zur Drehtellereinheit 29 ausgestaltet, so dass eine Rotation der Drehtellereinheit 29 nicht in eine Rotation der zweiten Abdeckplatte 62 übertragen wird.

Es sind vorliegend mittels der Drehverstelleinrichtung 20 drehbar gelagert: die obere Abdeckplatte 61, die Drehtellereinheit 29 sowie nicht dargestellte Teile, welche beispielsweise in Höhenrichtung 1z oberhalb der oberen Abdeckplatte 61 angeordnet sind und welche beispielsweise das eigentliche Sitzteil 5 mit Sitzfläche und/oder Rückenlehne ausgestalten. Vorliegend sind nicht mittels der Drehverstelleinrichtung 20 drehbar gelagert: die Längsverstelleinrichtung 10, die untere Abdeckplatte 62, die Primärgetriebeeinheit 27 und der zweite Elektromotor 26.

Unter den Teilen der Drehverstelleinrichtung 20, welche die obigen Bedingungen bezüglich der oberen 10z1, 20z1, unteren 10z2, 20z2, linken 10y1, 20y1, rechten 10y2, 20y2, vorderen 10x1, 20x1 und hinteren Grenzen 10x2, 20x2 erfüllen, sind vorliegend insbesondere die folgenden Teile einzeln oder in beliebiger Kombination zu verstehen: die Primärgetriebeeinheit 27, der zweite Elektromotor 26, die Sekundärgetriebeeinheit 28 und die Drehtellereinheit 29.

Vorliegend umfasst die Drehverstelleinrichtung 20 eine Spanneinheit 70, mittels welcher eine Vorspannung des bandförmigen Kraftübertragungsmittels 281 einstellbar ist (siehe hier insbesondere Fig. 2d und 2e, welche jeweils eine Ansicht der Drehverstelleinrichtung 20 von unten zeigen). Vorliegend umfasst die Spanneinheit 70 ein mit dem bandförmigen Kraftübertragungsmittel 281 in Eingriff stehendes Element 71, dessen Position entlang einer Führungsbahn 72 verstellbar ist. Vorliegend ist das Element 71 als Kettenrad ausgestaltet. Vorliegend ist die Führungsbahn 72 in einer Ebene ausgebildet, welche senkrecht zur Mittelachse des nicht gezeigten zweiten Schneckenrads und damit senkrecht zur Höhenrichtung 1z angeordnet ist. Vorliegend ist die Führungsbahn 72 in Form einer Aussparung 73 eines Gehäuseblechs 74 vorgesehen. Vorliegend ist mittels dieses Gehäuseblechs 74 ebenfalls ein Lagersitz für den zweiten Elektromotor 26 ausgebildet.

Es versteht sich, dass es sich bei den vorstehend erläuterten Ausführungsbeispielen lediglich um eine erste Ausgestaltung des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 1x: Längsrichtung
- 1y: Breitenrichtung
- 1z: Höhenrichtung
- 3: Unterteil
- 4: Oberteil
- 5: Sitzteil
- 8: Karosserieteil
- 10: Längsverstelleinrichtung
- 10x: erste Längsausdehnung der Längsverstelleinrichtung
- 10x1: erste vordere Grenze der ersten Längsausdehnung
- 10x2: erste hintere Grenze der ersten Längsausdehnung
- 10y: erste Breitenausdehnung der Längsverstelleinrichtung
- 10y1: erste linke Grenze der ersten Breitenausdehnung
- 10y2: erste rechte Grenze der ersten Breitenausdehnung
- 10z: erste Höhenausdehnung der Längsverstelleinrichtung
- 10z1: erste obere Grenze der ersten Höhenausdehnung
- 10z2: erste untere Grenze der ersten Höhenausdehnung
- 16, 26: Elektromotor
- 26z: Ausdehnung des Elektromotors 26
- 20: Drehverstelleinrichtung
- 20x: zweite Längsausdehnung der Drehverstelleinrichtung
- 20x1: zweite vordere Grenze der zweiten Längsausdehnung
- 20x2: zweite hintere Grenze der zweiten Längsausdehnung
- 20y: zweite Breitenausdehnung der Drehverstelleinrichtung
- 20y1: zweite linke Grenze der zweiten Breitenausdehnung
- 20y2: zweite rechte Grenze der zweiten Breitenausdehnung
- 20z: zweite Höhenausdehnung der Drehverstelleinrichtung
- 20z1: zweite obere Grenze der zweiten Höhenausdehnung
- 20z2: zweite untere Grenze der zweiten Höhenausdehnung
- 27: Primärgetriebeeinheit
- 28: Sekundärgetriebeeinheit
- 29: Drehtellereinheit
- 29z: Ausdehnung der Drehtellereinheit
- 30: Schieneneinheit
- 31: Führungsschiene
- 32: Gleitschiene
- 41,42: Ende
- 50: Wälzlagerkranzeinheit
- 51, 52: Käfigteller
- 61, 62: Abdeckplatte
- 70: Spanneinheit
- 71: Element
- 72: Führungsbahn
- 73: Aussparung
- 74: Gehäuseblech
- 121: Welle
- 122: Schneckengetriebeeinheit
- 123: Spindelelement
- 124: Mitnehmerelement
- 161, 261: Antriebsachse
- 281: bandförmiges Kraftübertragungsmittel
- 291,2811: Umfang
- A: Achse
- E: Ebene
- V: Nutzfahrzeug

## Patentansprüche

1. Fahrzeugsitz (1) mit einem Unterteil (3) zum Anordnen an einem Karosserieteil (8) eines Nutzfahrzeugs (V) und einem Oberteil (4) zum Lagern eines Sitzteils (5),
wobei der Fahrzeugsitz (1) eine Drehverstelleinrichtung (20), mittels welcher zumindest Teile des Oberteils (4) gegenüber dem Unterteil (3) um eine Achse (A) in Höhenrichtung (1z) des Fahrzeugsitzes (1) rotierbar ist, aufweist, wobei die Drehverstelleinrichtung (20) einen Elektromotor (26) zur Rotation einer mit dem Oberteil (4) starr verbundenen und gegenüber dem Unterteil (3) um die Achse (A) drehbar gelagerten Drehtellereinheit (29) umfasst,
wobei eine mit der Drehtellereinheit (29) mechanisch wechselwirkende Antriebsachse (261) des Elektromotors (26) parallel zur Breitenrichtung (1y) des Fahrzeugsitzes (1) angeordnet ist, wobei, jeweils in Höhenrichtung (1z) des Fahrzeugsitzes (1) betrachtet, eine Ausdehnung (26z) des Elektromotors (26) und eine Ausdehnung (29z) der Drehtellereinheit (29) zumindest teilweise überlappend angeordnet sind,
**dadurch gekennzeichnet, dass**
die Drehverstelleinrichtung (20) frei von einer Verbindung zum Unterteil (3) ausgestaltet ist.

2. Fahrzeugsitz (1) nach Anspruch 1,
**dadurch gekennzeichnet, dass**
der Elektromotor (26) mit einem vorderen Ende (41) des Oberteils (4) verbunden ist.

3. Fahrzeugsitz (1) nach einem der vorhergehenden Ansprüche,
**dadurch gekennzeichnet, dass**
die Drehverstelleinrichtung (20) eine Primärgetriebeeinheit (27) aufweist, welche antriebsseitig mit dem Elektromotor (26) und abtriebsseitig mit einer Sekundärgetriebeeinheit (28) mechanisch wirkverbunden ist,
wobei die Sekundärgetriebeeinheit (28) mit einer mit dem Oberteil (4) starr verbundenen und gegenüber dem Unterteil (3) drehbar gelagerten Drehtellereinheit (29) der Drehverstelleinrichtung (20) mechanisch wirkverbunden angeordnet ist.

4. Fahrzeugsitz (1) nach Anspruch 3,
**dadurch gekennzeichnet, dass**
die Sekundärgetriebeeinheit (28) ein mit einem Umfang (291) der Drehtellereinheit (29) wechselwirkendes und in sich geschlossenes bandförmiges Kraftübertragungsmittel (281) umfasst, welches mittels des Elektromotors (26) in Richtung seines Umfangs (2811) förderbar ist.

5. Fahrzeugsitz (1) nach Anspruch 4,
**dadurch gekennzeichnet, dass**
die Drehtellereinheit (29) als ein Kettenrad und das bandförmige Kraftübertragungsmittel (281) als ein Kettenelement ausgestaltet ist.

6. Fahrzeugsitz (1) nach Anspruch 4,
**dadurch gekennzeichnet, dass**
die Drehtellereinheit (29) als ein Riemenscheibenelement und das bandförmige Kraftübertragungsmittel (281) als ein Riemenelement ausgestaltet ist.

7. Fahrzeugsitz (1) nach einem der vorhergehenden Ansprüche,
**dadurch gekennzeichnet, dass**
die Drehverstelleinrichtung (20) ausgehend von einer Grundstellung um mehr als 180° in beide Drehrichtungen (201; 201) drehbar ist.

8. Fahrzeugsitz (1) nach einem der vorhergehenden Ansprüche,
**dadurch gekennzeichnet, dass**
die Drehverstelleinrichtung (20) eine Spanneinheit (70) umfasst, mittels welcher eine Vorspannung des bandförmigen Kraftübertragungsmittels einstellbar ist.

9. Fahrzeugsitz (1) nach Anspruch 8,
**dadurch gekennzeichnet, dass**
die Spanneinheit (70) ein mit dem bandförmigen Kraftübertragungsmittel (281) in Eingriff stehendes Element (71) umfasst, dessen Position entlang einer Führungsbahn (72) verstellbar ist.

10. Fahrzeugsitz (1) nach einem der vorhergehenden Ansprüche,
**dadurch gekennzeichnet, dass**
die Drehverstelleinrichtung (20) frei von einer zusätzlichen Verriegelungseinrichtung zum Verriegeln der Drehverstelleinrichtung (20) in Bezug auf die Rotation des Oberteils (4) gegenüber dem Unterteil (3) um die Achse (A) in Höhenrichtung (1z) ausgestaltet ist.

## Claims

1. Vehicle seat (1) with a lower part (3) for arrangement on a body part (8) of a commercial vehicle (V) and an upper part (4) for storing a seat part (5),
wherein the vehicle seat (1) has a rotational adjustment device (20), by means of which at least parts of the upper part (4) are rotatable relative to the lower part (3) about an axis (A) in the height direction (1z) of the vehicle seat (1), wherein the rotational adjustment device (20) comprises an electric motor (26) for rotating a rotary plate unit (29) which is rigidly connected to the upper part (4) and is mounted so as to rotate relative to the lower part (3) about the axis (A),wherein a driveshaft (261) of the electric motor(26) which mechanically interacts with the rotary plate unit (29) is arranged parallel to the width direction (1y) of the vehicle seat (1), wherein, viewed in each case in the height direction (1z) of the vehicle seat (1), an extension (26z) of the electric motor (26) and an extension (29z) of the rotary plate unit (29) are arranged to be at least partially overlapping
**characterised in that**
the rotational adjustment device (20) is designed free of a connection to the lower part.

2. Vehicle seat (1) according to claim 1,
**characterised in that**
the electric motor (26) is connected to a front end (41) of the upper part (4).

3. Vehicle seat (1) according to one of the preceding claims,
**characterised in that**
the rotational adjustment device (20) has a primary gear unit (27), which is mechanically and operatively connected on the drive side to the second electric motor (26) and, on the output side, to a secondary gear unit (28),
wherein the secondary gear unit (28) is arranged to be mechanically and operatively connected to a rotary plate unit (29) of the rotational adjustment device (20), which is rotatably mounted with respect to the lower part (3) and rigidly connected to the upper part (4).

4. Vehicle seat (1) according to claim 3,
**characterised in that**
the secondary gear unit (28) comprises a self-contained ribbon-shaped force transmission means (281), which interacts with a circumference (291) of the rotary plate unit (29), and which can be conveyed in the direction of its circumference (2811) by means of the electric motor (26).

5. Vehicle seat (1) according to claim 4,
**characterised in that**
the rotary plate unit (29) is designed as a chain wheel, and the ribbon-shaped force transmission means (281) is designed as a chain element.

6. Vehicle seat (1) according to claim 4,
**characterised in that**
the rotary plate unit (29) is designed as a pulley element, and the ribbon-shaped force transmission means (281) is designed as a belt element.

7. Vehicle seat (1) according to one of the preceding claims,
**characterised in that**
the rotational adjustment device (20), starting from an initial position, is rotatable by more than 180° in both directions of rotation (201; 201).

8. Vehicle seat (1) according to one of the preceding claims,
**characterised in that**
the rotational adjustment device (20) comprises a tensioning unit (70), by means of which a pre-tensioning of the ribbon-shaped force transmission means can be adjusted.

9. Vehicle seat (1) according to claim 8,
**characterised in that**
the tensioning unit (70) comprises an element (71), which is in engagement with the ribbon-shaped force transmission means (281), and whose position can be adjusted along a guide track (72).

10. Vehicle seat (1) according to one of the preceding claims,
**characterised in that**
the rotational adjustment device (20) is designed without an additional locking device for locking the rotational adjustment device (20) in relation to the rotation of the upper part (4) relative to the lower part (3) about the axis (A) in the height direction (1z).

## Revendications

1. Siège de véhicule (1) ayant une partie inférieure (3) destinée à être disposée sur une partie carrosserie (8) d'un véhicule utilitaire (V) et une partie supérieure (4) destinée à supporter une partie siège (5),
le siège de véhicule (1) présentant un dispositif de réglage en rotation (20), au moyen duquel au moins des parties de la partie supérieure (4) sont aptes à être tournées par rapport à la partie inférieure (3) autour d'un axe (A) dans la direction de la hauteur (1z) du siège de véhicule (1), le dispositif de réglage en rotation (20) comportant un moteur électrique (26) pour la rotation d'un ensemble plateau tournant (29) relié rigidement avec la partie supérieure (4) et monté apte à tourner par rapport à la partie inférieure (3) autour de l'axe (A),
un axe d'entraînement (261) du moteur électrique (26), interagissant mécaniquement avec l'ensemble plateau tournant (29), étant disposé parallèlement à la direction de la largeur (1y) du siège de véhicule (1), une étendue (26z) du moteur électrique (26) et une étendue (29z) de l'ensemble plateau tournant (29) étant disposées de manière à se chevaucher au moins partiellement, chacune étant vue dans la direction de la hauteur (1z) du siège de véhicule (1),
**caractérisé par le fait que**
le dispositif de réglage en rotation (20) est conçu sans liaison à la partie inférieure (3).

2. Siège de véhicule (1) selon la revendication 1,
**caractérisé par le fait que**
le moteur électrique (26) est relié avec une extrémité avant (41) de la partie supérieure (4).

3. Siège de véhicule (1) selon l'une des revendications précédentes,
**caractérisé par le fait que**
le dispositif de réglage en rotation (20) présente un ensemble engrenage primaire (27), lequel est en liaison mécanique active avec le moteur électrique (26) côté entraînement et avec un ensemble d'engrenage secondaire (28) côté sortie,
l'ensemble engrenage secondaire (28) étant disposé en liaison mécanique active avec un ensemble plateau tournant (29) du dispositif de réglage en rotation (20), relié rigidement avec la partie supérieure (4) et monté apte à tourner par rapport à la partie inférieure (3).

4. Siège de véhicule (1) selon la revendication 3,
**caractérisé par le fait que**
l'ensemble engrenage secondaire (28) comporte un moyen de transmission de force (281) interagissant avec une périphérie (291) de l'ensemble de plateau tournant (29) et en forme de bande fermée sur elle-même, lequel est apte à être transporté dans la direction de sa périphérie (2811) au moyen du moteur électrique (26).

5. Siège de véhicule (1) selon la revendication 4,
**caractérisé par le fait que**
l'ensemble de plateau tournant (29) est conçu comme une roue à chaîne et le moyen de transmission de force en forme de bande (281) est conçu comme un élément chaîne.

6. Siège de véhicule (1) selon la revendication 4,
**caractérisé par le fait que**
l'ensemble de plateau tournant (29) est conçu comme un élément poulie et le moyen de transmission de force en forme de bande (281) est conçu comme un élément courroie.

7. Siège de véhicule (1) selon l'une des revendications précédentes,
**caractérisé par le fait que**
le dispositif de réglage en rotation (20) est apte à être tourné de plus de 180° dans les deux sens de rotation (201 ; 201) à partir d'une position de base.

8. Siège de véhicule (1) selon l'une des revendications précédentes,
**caractérisé par le fait que**
le dispositif de réglage en rotation (20) comprend une unité de mise en tension (70) au moyen de laquelle une mise en tension préalable du moyen de transmission de force en forme de bande est réglable.

9. Siège de véhicule (1) selon la revendication 8,
**caractérisé par le fait que**
l'unité de mise en tension (70) comporte un élément (71) en prise avec le moyen de transmission de force en forme de bande (281), élément dont la position est réglable le long d'un trajet de guidage (72).

10. Siège de véhicule (1) selon l'une des revendications précédentes,
**caractérisé par le fait que**
le dispositif de réglage en rotation (20) est conçu sans dispositif de blocage supplémentaire pour bloquer le dispositif de réglage en rotation (20) en ce qui concerne la rotation de la partie supérieure (4) par rapport à la partie inférieure (3) autour de l'axe (A) dans la direction de la hauteur (1z).
